# FASCICULE DE BREVET EUROPEEN

(11) **EP 3 172 242 B1**
(45) Date de publication et mention de la délivrance du brevet: **27.03.2019**
(21) Numéro de dépôt: 15736488.6
(22) Date de dépôt: 09.07.2015
(51) Int. Cl.: C08C 19/22, B60C 1/00, C08F 8/30

(54) **POLYMERE MODIFIE LE LONG DE LA CHAINE ET SON PROCEDE DE SYNTHESE**
ENTLANG DER KETTE MODIFIZIERTES POLYMER UND VERFAHREN ZUR SYNTHESE DAVON
POLYMER MODIFIED ALONG THE CHAIN AND PROCESS FOR THE SYNTHESIS THEREOF

(30) Priorité: 21.07.2014 FR 1457012
(43) Date de publication de la demande: 31.05.2017
(73) Titulaire: Compagnie Générale des Etablissements Michelin, 63000 Clermont-Ferrand (FR)
(72) Inventeur: FLEURY, Etienne, F-63040 Clermont-Ferrand Cedex 9 (FR); THUILLIEZ, Julien, F-63040 Clermont-Ferrand Cedex 9 (FR); FAVROT, Jean-Michel, F-63040 Clermont-Ferrand Cedex 9 (FR)
(74) Mandataire: Gandon-Pain, Sylvie
(86) Numéro de dépôt international: PCT/EP2015/065750
(87) Numéro de publication internationale: WO 2016/012257

(56) Documents cités:
- EP-A2- 1 954 705
- WO-A1-2012/007685
- WO-A1-2013/007442
- WO-A1-2014/090756

## Description

La présente invention concerne un polymère portant des groupes associatifs pendant le long de sa chaîne polymère, ainsi que son procédé de synthèse.

La modification de la structure chimique d'un polymère impacte généralement les propriétés chimiques et physiques du polymère, ainsi que les propriétés des compositions le contenant. La modification de structure d'un polymère, telle que la fonctionnalisation d'un polymère, est particulièrement recherchée lorsque l'on souhaite mettre en présence un polymère et une charge dans une composition. La modification chimique d'un polymère peut améliorer la dispersion de la charge dans le polymère et permettre ainsi l'obtention d'un matériau davantage homogène. Dans le cas de certaines charges, comme le noir de carbone ou la silice, une meilleure dispersion de la charge va généralement se traduire par une baisse d'hystérèse de la composition.

Par ailleurs, dans le domaine du pneumatique, il est également recherché des compositions de caoutchouc à base d'élastomère et de charge renforçante qui soient non seulement peu hystérétiques, mais aussi qui soient les plus résistantes à l'usure. Par exemple, l'utilisation d'un élastomère diénique portant en bout de chaîne une fonction silanol dans une composition de caoutchouc renforcée par une silice est connue pour améliorer significativement à la fois la résistance à l'usure et la résistance au roulement d'un pneumatique contenant cette composition dans sa bande de roulement. On peut se référer par exemple à la publication du brevet EP 778 311 B1.

Les manufacturiers de pneumatiques cherchent toujours à améliorer constamment la résistance à l'usure et la résistance au roulement d'un pneumatique.

Les Demanderesses ont découvert que l'utilisation d'un élastomère de microstructure particulière et portant des groupes associatifs le long de sa chaîne dans une composition de caoutchouc renforcée permet d'atteindre cette cible.

Ainsi, un premier objet de l'invention est un polymère qui comprend les unités UA, UB, UC et UD suivantes et au moins une unité portant un motif F,

| | | |
|---|---|---|
| UA) | -CH₂-CH₂- | selon un pourcentage molaire de m% |
| UB) | -CH₂-R₁C=CR₂-CH₂- | selon un pourcentage molaire de n% |
| UC) | 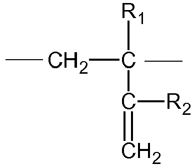 | selon un pourcentage molaire de o% |
| UD) | 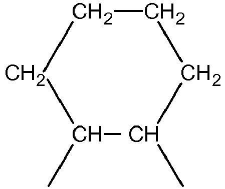 | selon un pourcentage molaire de p% |

▪ lesquelles unités UA, UB, UC et UD sont distribuées statistiquement au sein du polymère,
▪ le motif F étant pendant le long de la chaîne du polymère et portant un groupe associatif comprenant au moins un atome d'azote,
▪ l'unité portant le motif F étant présente dans la chaîne polymère selon un pourcentage molaire de f%,
▪ R₁ et R₂, identiques ou différents, désignant un atome d'hydrogène, un radical méthyle ou un radical phényle substitué ou non en position ortho, méta ou para par un radical méthyle,
▪ m ≥ 50
▪ n ≥ 0
▪ o ≥ 0
▪ f > 0
▪ 0 < o + p ≤ 25
▪ m, n, o, p et f étant des nombres allant de 0 à 100
▪ les pourcentages molaires respectifs de m, n, o, p et f étant calculés sur la base de la somme de m + n + o + p + f qui est égale à 100

- le groupe associatif répondant à l'une des formules (I) à (V) suivantes : 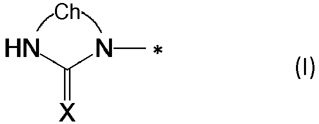 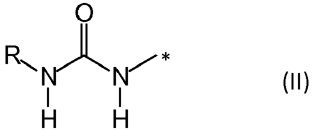 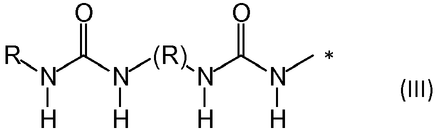 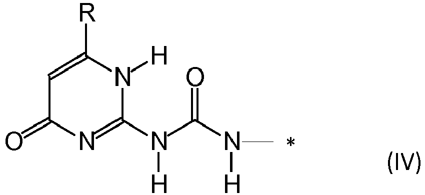 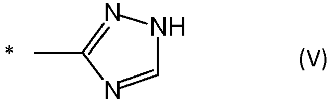 où :
   - Ch désigne une chaîne carbonée pouvant éventuellement contenir des hétéroatomes,
   - * représente un rattachement direct ou indirect à la chaîne du polymère,
   - R désigne un groupe hydrocarboné pouvant éventuellement contenir des hétéroatomes,
   - X désigne un atome d'oxygène ou de soufre ou un groupe NH, de préférence un atome d'oxygène.

Un autre objet de l'invention est un procédé pour fabriquer le polymère conforme à l'invention.

L'invention concerne aussi une composition de caoutchouc comprenant le polymère conforme à l'invention, en particulier élastomère, et une charge renforçante.

L'invention concerne également un pneumatique comprenant la composition de caoutchouc conforme à l'invention, notamment dans sa bande de roulement.

### I. DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Le polymère conforme à l'invention a pour caractéristique essentielle de comprendre les unités UA, UB, UC et UD suivantes et au moins une unité portant un motif F,

| | | |
|---|---|---|
| UA) | -CH₂-CH₂- | selon un pourcentage molaire de m% |
| UB) | -CH₂-R₁C=CR₂-CH₂- | selon un pourcentage molaire de n% |
| UC) | 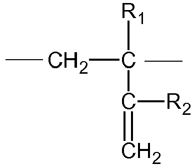 | selon un pourcentage molaire de o% |
| UD) | 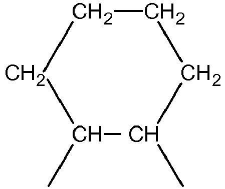 | selon un pourcentage molaire de p% |

▪ lesquelles unités UA, UB, UC et UD sont distribuées statistiquement au sein du polymère,
▪ le motif F étant pendant le long de la chaîne du polymère et portant un groupe associatif comprenant au moins un atome d'azote,
▪ l'unité portant le motif F étant présente dans la chaîne polymère selon un pourcentage molaire de f%,
▪ R₁ et R₂, identiques ou différents, désignant un atome d'hydrogène, un radical méthyle ou un radical phényle substitué ou non en position ortho, méta ou para par un radical méthyle,
▪ m ≥ 50
▪ n ≥ 0
▪ o ≥ 0
▪ f > 0
▪ 0 < o + p ≤ 25
▪ m, n, o, p et f étant des nombres allant de 0 à 100
▪ les pourcentages molaires respectifs de m, n, o, p et f étant calculés sur la base de la somme de m + n + o + p + f qui est égale à 100.

On entend par groupe associatif un ou plusieurs groupes associatifs, de préférence un seul.

Selon un mode de réalisation particulier de l'invention, le polymère conforme à l'invention contient des unités UE suivantes distribuées statistiquement au sein du polymère,

| | | |
|---|---|---|
| UE) | 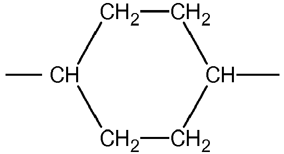 | selon un pourcentage molaire de q% |

▪ o + p + q ≥ 10
▪ q ≥ 0
▪ les pourcentages molaires respectifs de m, n, o, p, q et f étant calculés sur la base de la somme de m + n + o + p + q +f qui est égale à 100.

Alors que le motif de l'unité UD forme un cycle hydrocarboné bivalent à 6 atomes de carbone de type 1,2-cyclohexane, le motif de l'unité UE forme un cycle hydrocarboné bivalent à 6 atomes de carbone de type 1,4-cyclohexane.

Selon un autre mode de réalisation particulier de l'invention, le polymère conforme à l'invention contient des unités UF suivantes distribuées statistiquement au sein du polymère,

| | | |
|---|---|---|
| UF) | 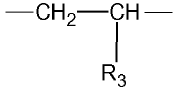 | selon un pourcentage molaire de r% |

▪ R₃ désignant un radical alkyle ayant de 1 à 4 atomes de carbone ou un radical aryle,
▪ 0≤ r ≤25, de préférence 0≤ r ≤10,
▪ les pourcentages molaires respectifs de m, n, o, p, r et f étant calculés sur la base de la somme de m+ n + o + p + r + f qui est égale à 100.

Selon ce mode de réalisation particulier de l'invention, le polymère conforme à l'invention peut comprendre q% d'unités UE distribuées statistiquement au sein du polymère, auquel cas les pourcentages molaires respectifs de m, n, o, p, q et r sont calculés sur la base de la somme de m+ n + o + p + q + r qui est égale à 100.

Selon un mode de réalisation particulier de l'invention, les unités portant le motif F dérivent de l'une des deux unités UB et UC ou bien des deux unités UB et UC. Selon ce mode de réalisation particulier de l'invention, le motif F est greffé sur des unités UB ou sur des unités UC ou encore sur des unités UB et UC pour conduire aux unités du polymère portant le motif F pendant le long de la chaîne du polymère. Dans le cas où toutes les unités UB et UC sont greffés par le motif F, n et o sont égaux à 0.

Selon un mode de réalisation préférentiel de l'invention, au moins l'un des deux pourcentages n et o est différent de 0, de préférence les deux sont différents de 0, auxquels cas le polymère est considéré comme un polymère diénique, c'est-à-dire que le polymère comporte des unités d'origine diénique qui comprennent une double liaison carbone carbone.

Selon l'un quelconque des modes de réalisation de l'invention, de préférence le polymère conforme à l'invention ne contient pas d'unité UF.

Selon un mode de réalisation de l'invention, au moins l'un des deux pourcentages molaires p et q est différent de 0. Autrement dit, de préférence le polymère conforme à l'invention contient au moins l'un des motifs qui sont un cycle hydrocarboné bivalent à 6 atomes de carbone de type 1,2-cyclohexane et un cycle hydrocarboné bivalent à 6 atomes de carbone de type 1,4-cyclohexane.

Selon l'un quelconque des modes de réalisation de l'invention, de manière plus préférentielle p est strictement supérieur à 0.

Selon un mode de réalisation de l'invention, le polymère conforme à l'invention contient comme unités monomères uniquement les unités UA, UB, UC, UD et les unités portant le motif F selon leur pourcentage molaire respectif m, n, o, p et f, de préférence tous différents de 0.

Selon un autre mode de réalisation de l'invention, le polymère conforme à l'invention contient comme unités monomères uniquement les unités UA, UB, UC, UD, UE et les unités portant le motif F selon leur pourcentage molaire respectif m, n, o, p, q et f, de préférence tous différents de 0.

Selon l'un quelconque des modes de réalisations de l'invention, les unités UB présentes dans le polymère conforme à l'invention ont de préférence la configuration trans représentée par la formule suivante :

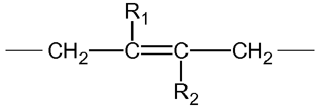

Selon un mode de réalisation préférentiel de l'invention, R₁ et R₂ sont identiques et désignent chacun un atome d'hydrogène.

Selon l'un quelconque des modes de réalisation de l'invention, le pourcentage molaire f varie de préférence de 0.01 à 50%, de manière plus préférentielle 0.01 à 10%, de manière encore plus préférentielle de 0.03 à 5%, mieux de 0.03 à 3%.

Par groupe associatif, on entend des groupes susceptibles de s'associer les uns aux autres par des liaisons hydrogène, ioniques et/ou hydrophobes. Il s'agit selon un mode préféré de l'invention de groupes susceptibles de s'associer par des liaisons hydrogène. Lorsque les groupes associatifs sont susceptibles de s'associer par des liaisons hydrogène, chaque groupe associatif comporte au moins un « site » donneur et un site accepteur vis-à-vis de la liaison hydrogène de sorte que deux groupes associatifs identiques sont auto-complémentaires et peuvent s'associer entre eux en formant au moins deux liaisons hydrogène. Les groupes associatifs selon l'invention sont également susceptibles de s'associer par des liaisons hydrogène, ioniques et/ou hydrophobes à des fonctions présentes sur des charges.

Selon l'invention, le groupe associatif répond à l'une des formules (I) à (V) : 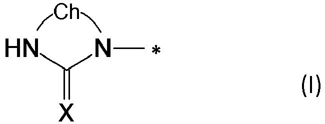 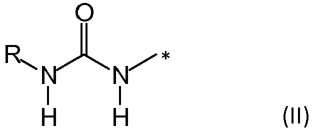 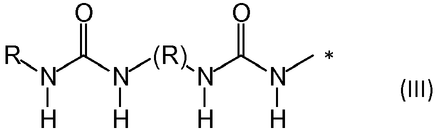 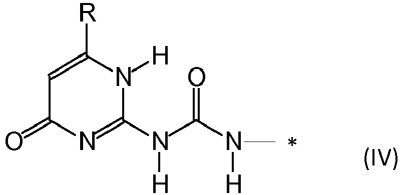 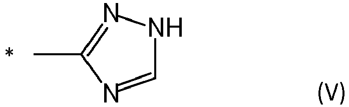 où :
- Ch désigne une chaîne carbonée pouvant éventuellement contenir des hétéroatomes,
- * représente un rattachement direct ou indirect à la chaîne du polymère,
- R désigne un groupe hydrocarboné pouvant éventuellement contenir des hétéroatomes,
- X désigne un atome d'oxygène ou de soufre ou un groupe NH, de préférence un atome d'oxygène.
Généralement, le cycle dans la formule (I) est un cycle à 5 ou 6 atomes.

Selon un mode de réalisation davantage préférentiel de l'invention, le groupe associatif répond à la formule (VI) 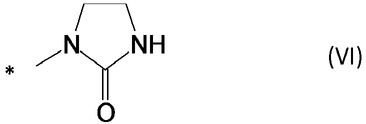 où * représente un rattachement direct ou indirect à la chaîne du polymère.

Selon l'un quelconque des modes de réalisation de l'invention, le polymère conforme à l'invention est préférentiellement un élastomère.

Selon l'un quelconque des modes de réalisation de l'invention, le polymère conforme à l'invention présente de préférence une masse molaire moyenne en nombre (Mn) d'au moins 60 000 g/mol et d'au plus 1 500 000 g/mol. Le polymère conforme à l'invention présente de préférence un indice de polydispersité Ip, égal à Mw/Mn (Mw étant la masse molaire moyenne en poids) compris entre 1,20 et 3,00. Les valeurs de Mn, Mw et Ip sont mesurées selon la méthode décrite dans le paragraphe II.1.

Le polymère conforme à l'invention peut être préparé par réaction de greffage selon un procédé, autre objet de l'invention, qui comprend la réaction d'un polymère diénique de départ avec un agent de modification, lequel agent de modification comprend d'une part un groupe associatif comprenant au moins un atome d'azote et d'autre part un motif G contenant un groupe réactif vis-à-vis de la chaîne du polymère diénique de départ.

Selon un mode de réalisation particulier du procédé conforme à l'invention, G désigne un motif contenant un groupe réactif vis-à-vis d'au moins une unité diénique du polymère diénique de départ. On entend par unité diénique une unité monomère résultant de l'insertion d'un monomère diène par polymérisation d'un diène dans la chaîne polymère, l'unité diénique comportant une double liaison carbone carbone, l'unité diénique étant de préférence une unité de monomère 1,3-butadiène, à savoir -CH₂-CH=CH-CH₂- ou -CH₂-CH(CH=CH₂)-. Le groupe réactif contenu dans G permet de greffer sur la chaîne du polymère diénique de départ le ou les groupes associatifs par réaction impliquant une double liaison carbone carbone présente dans la ou les unités diéniques du polymère diénique de départ.

Selon un mode de réalisation particulier de l'invention, le groupe réactif contenu dans G est choisi dans le groupe constitué par la fonction SH, le groupe azo-dicarbonyle et un dipôle contenant au moins et de préférence un atome d'azote. Le groupe azo-dicarbonyle est défini par la formule -CO-N=N-CO-.

Selon une première variante de l'invention, l'agent de modification contient une fonction SH et est de formule (VII) 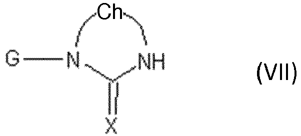 où :
▪ X désigne un atome d'oxygène ou de soufre ou un groupe -NH, de préférence un atome d'oxygène,
▪ Ch désigne une chaîne carbonée pouvant éventuellement contenir des hétéroatomes,
▪ G désigne un motif contenant comme groupe réactif la fonction SH.

Selon un mode de réalisation de la première variante de l'invention, l'agent de modification de formule (VII) est un composé de préférence diazoté, généralement à 5 ou 6 chaînons, en particulier un composé appartenant à la famille des imidazolidinyles, le groupe imidazolidinyle étant le groupe associatif. A titre d'exemple d'agent de modification convient par exemple la 11-mercapto-N-(2-(2-oxoimidazolidin-1-yl)éthyl)undecanamide.

Selon une deuxième variante de l'invention, l'agent de modification contient un groupe azo-dicarbonyle et est de formule (VIII).

W-CO-N=N-CO-Sp-A (VIII)

où :
- A représente le groupe associatif comprenant au moins un atome d'azote,
- Sp est un groupe espaceur divalent reliant le groupe azodicarbonyle au groupe associatif A,
- W représente
   un groupe de formule :

   R'-Z-

   dans lequel :
   - Z représente un atome d'oxygène, de soufre ou un groupe -NH ou -NR',
   - R' représente un groupe alkyle en C₁-C₂₀, de préférence un alkyle en C₁-C₆, et de manière tout à fait préférée C₁-C₄ , par exemple le méthyle ou l'éthyle,
   ou
   un groupe de formule :

   - Sp'-A'

   dans laquelle :
   - Sp', identique ou différent de Sp est un groupe espaceur divalent reliant le groupe azodicarbonyle à un autre groupe associatif A',
   - A', identique ou différent de A, est un groupe associatif comprenant au moins un atome d'azote.

Selon la deuxième variante de l'invention, le groupe associatif comprenant au moins un atome d'azote, en l'espèce A et éventuellement A', répond à l'une des formules (IX) à (XIII) 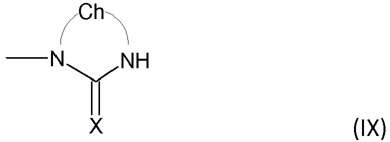 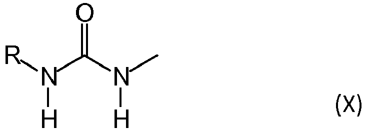 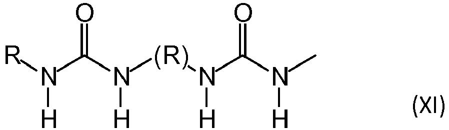 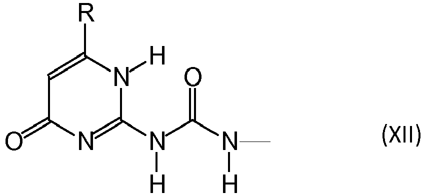 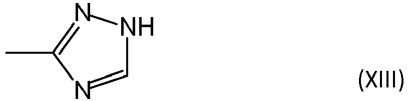 où :
▪ X désigne un atome d'oxygène ou de soufre ou un groupe -NH, de préférence un atome d'oxygène,
▪ Ch désigne une chaîne carbonée pouvant éventuellement contenir des hétéroatomes,
▪ R désigne un groupe hydrocarboné pouvant éventuellement contenir des hétéroatomes.

Par exemple, des agents de modification selon la deuxième variante de l'invention sont représentés par les formules (XIV) ou (XV) :

R'-Z-CO-N=N-CO-Sp-A (XIV)

ou

A'-Sp'-CO-N=N-CO-Sp-A (XV)

la définition des symboles R', Z, A, A', Sp et Sp' étant celle donnée dans le cadre de la deuxième variante de l'invention.

Le groupe « espaceur », qu'il s'agisse de Sp ou Sp,' permettent de relier un groupe azodicarbonyle à un groupe associatif, et ainsi peut être de tout type connu en soi. Le groupe « espaceur » ne doit cependant pas, ou peu, interférer avec le groupe azodicarbonyle et le groupe associatif. Le groupe « espaceur » est de préférence une chaîne hydrocarbonée, linéaire, ramifiée, cyclique, peut contenir un ou plusieurs radicaux aromatiques, et/ou un ou plusieurs hétéroatomes. Ladite chaîne peut éventuellement être substituée, pour autant que les substituants soient inertes vis-à-vis des groupes azodicarbonyle et associatif.

Selon un mode de réalisation préféré de la deuxième variante de l'invention, le groupe « espaceur » est une chaîne alkyle linéaire ou ramifiée en C₁-C₂₄, de préférence C₁-C₁₀ éventuellement comprenant un ou plusieurs hétéroatomes choisis parmi les atomes d'azote, de soufre, de silicium ou d'oxygène, plus préférentiellement une chaîne alkylène linéaire en C₁-C₆. De manière tout à fait préférée, le groupe « espaceur» Sp ou Sp' est choisi parmi -(CH₂)y-, -NH-(CH₂)y-, -O-(CH₂)y-, y étant un entier de 1 à 6. Ces modes de réalisation préférentiels peuvent s'appliquer à l'un quelconque des modes de réalisation de la deuxième variante de l'invention.

Selon l'un quelconque des modes de réalisation de la deuxième variante de l'invention, l'agent de modification est de préférence choisi parmi les composés de formule (XVI) ou (XVII) suivantes : 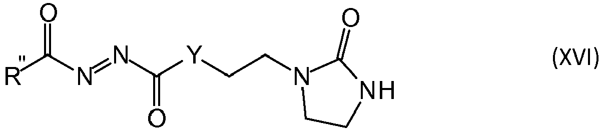 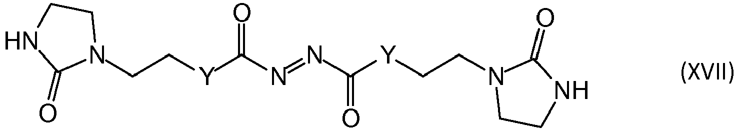 dans lesquelles :
- Y représente un groupe divalent choisi parmi un groupe méthylène, un atome d'oxygène, de soufre et un groupe -NH-, et
- R" représente un groupe alcoxy en C₁-C₆, de préférence un alcoxy en C₁-C₄ et de manière tout à fait préférée le méthoxy ou l'éthoxy.

Selon l'un quelconque des modes de réalisation de la deuxième variante de l'invention, l'agent de modification est choisi de manière plus préférentielle parmi les composés de formules (XVIII) à (XXI) ci-dessous :

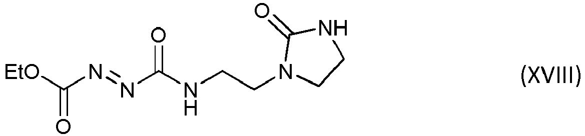

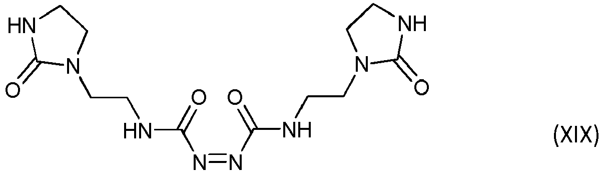

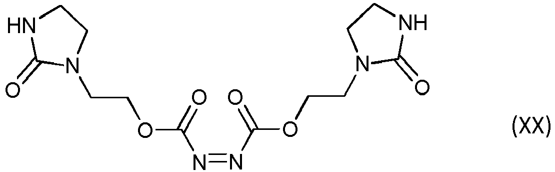

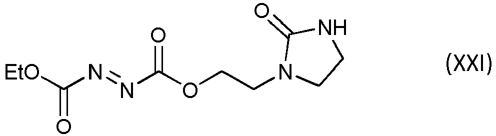

Ces composés utiles aux besoins de la deuxième variante de l'invention peuvent être préparés selon les procédés décrits dans la demande de brevet WO 2012007443.

Selon la deuxième variante de l'invention, le greffage de l'agent de modification est effectué par "ène réaction" sur une double liaison carbone-carbone de la chaîne du polymère diénique de départ.

Selon une troisième variante de l'invention, l'agent de modification contient un (un ou plusieurs) groupe Q et un (un ou plusieurs) groupe A reliés entre eux par un groupe B dans lequel :
- Q comprend un dipôle contenant au moins et de préférence un atome d'azote,
- A représente le groupe associatif comprenant au moins un atome d'azote,
- B est un atome ou un groupe d'atomes formant une liaison entre Q et A.

Selon l'un quelconque des modes de réalisation de la troisième variante, l'agent de modification contient de préférence un seul groupe Q relié au(x) groupe(s) A par le groupe B.

Selon l'un quelconque des modes de réalisation de la troisième variante, l'agent de modification contient de manière plus préférentielle un seul groupe Q et un seul groupe A reliés entre eux par le groupe B.

On entend par dipôle une fonction capable de former une cycloaddition dipolaire [1,3] sur une liaison carbone-carbone insaturée.

Selon la troisième variante de l'invention, le groupe A répond à l'une des formules (XXII) à (XXVI) suivantes : 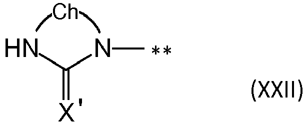 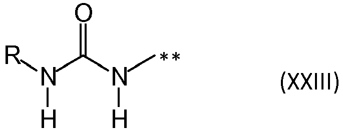 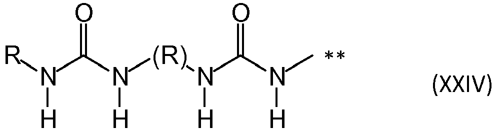 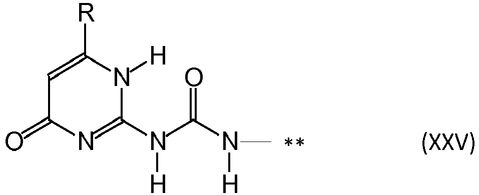 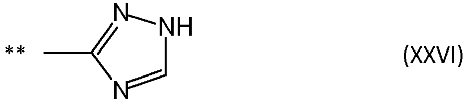 où :
- ** représente un rattachement direct à B,
- Ch désigne une chaîne carbonée pouvant éventuellement contenir des hétéroatomes,
- R est tel que défini précédemment, à savoir un groupe hydrocarboné pouvant éventuellement contenir des hétéroatomes,
- X' désigne un atome d'oxygène ou de soufre, de préférence un atome d'oxygène.

Selon un mode de réalisation davantage préférentiel de la troisième variante de l'invention, le groupe A répond à la formule (XXVII) 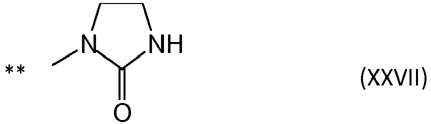 où ** représente un rattachement direct à B.

Le groupe B qui est un atome ou un groupe d'atomes formant une liaison entre Q et A est de préférence un groupe contenant jusqu'à 20 atomes de carbone et pouvant contenir au moins un hétéroatome. B peut être une chaîne aliphatique contenant préférentiellement 1 à 20 atomes de carbone, plus préférentiellement 1 à 12 atomes de carbone, encore plus préférentiellement 1 à 6 atomes de carbone, ou un groupe comportant un motif aromatique et contenant préférentiellement 6 à 20 atomes de carbone, plus préférentiellement 6 à 12 atomes de carbone.

Selon la troisième variante de l'invention, l'agent de modification est de préférence un oxyde de nitrile, une nitrone ou une nitrile imine. Autrement dit, la troisième variante de l'invention comprend trois alternatives, la première correspondant à Q contenant un motif -C≡N→O, la seconde un motif -C=N(→O)- et la troisième un motif -C≡N→N-.

Selon la première alternative de la troisième variante de l'invention mettant en oeuvre comme agent de modification un oxyde de nitrile, Q représente préférentiellement le motif répondant à la formule (XXVIII) dans laquelle quatre des cinq symboles R₄ à R₈, identiques ou différents, sont chacun un atome, en particulier H, ou un groupe d'atomes et le cinquième symbole désigne un rattachement direct à B, sachant que R₄ et R₈ sont de préférence tous les deux différents de H. Les quatre des cinq symboles R₄ à R₈ peuvent être des groupes aliphatiques ou aromatiques. Les groupes aliphatiques peuvent contenir de 1 à 20 atomes de carbone, préférentiellement de 1 à 12 atomes de carbone, plus préférentiellement de 1 à 6 atomes de carbone, encore plus préférentiellement de 1 à 3 atomes de carbone. Les groupes aromatiques, aryle, alkylaryle ou arylalkyle, peuvent contenir de 6 à 20 atomes de carbone, préférentiellement de 6 à 12 atomes de carbone.

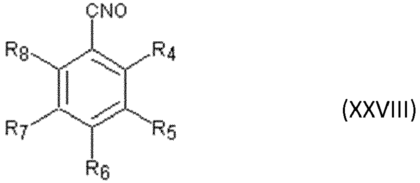

R₄, R₆ et R₈ sont préférentiellement chacun un groupe alkyle de 1 à 6 atomes de carbone, plus préférentiellement de 1 à 3 atomes de carbone, encore plus préférentiellement un groupe méthyle ou éthyle.

Selon un mode de réalisation particulier de cette première alternative, R₄, R₆ et R₈ sont identiques.
Dans le cas où R₄, R₆ et R₈ sont identiques, R₄, R₆ et R₈ sont préférentiellement chacun un groupe alkyle de 1 à 6 atomes de carbone, plus préférentiellement de 1 à 3 atomes de carbone, encore plus préférentiellement un groupe méthyle ou éthyle.

Selon cette première alternative conviennent par exemple les composés 1,3-dipolaires de formule (XXIX) à (XXXIV) :

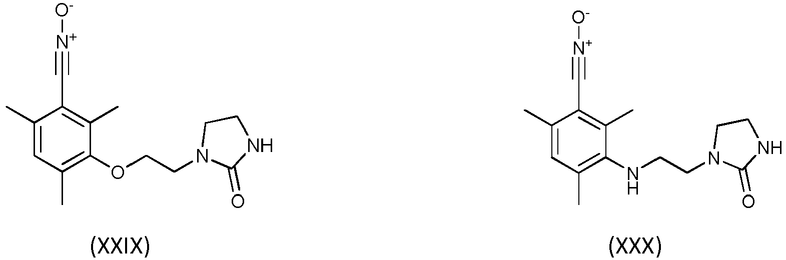

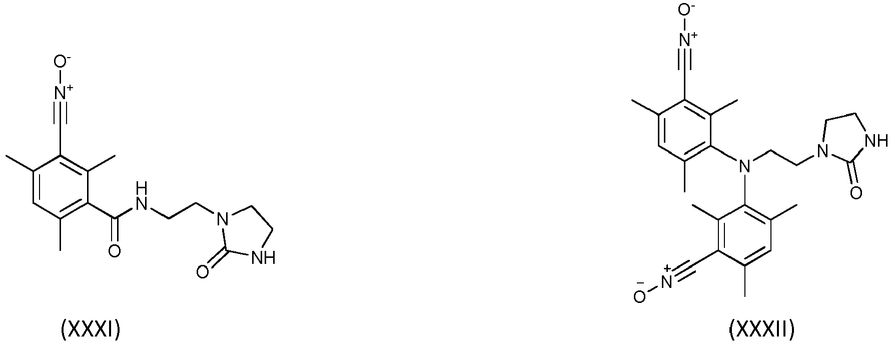

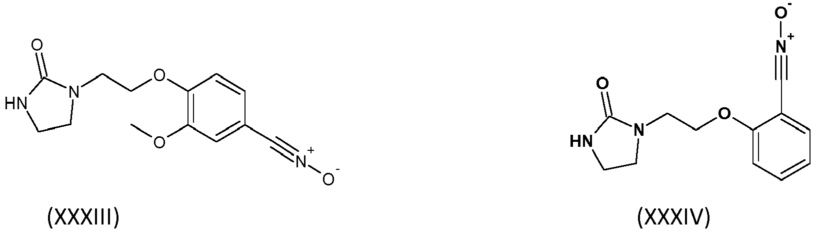

De manière davantage préférentielle, l'agent de modification selon cette première alternative est le composé 1,3-dipolaire de formule (XXIX), le 2,4,6-triméthyl-3-(2-(2-oxoimidazolidin-1-yl)éthoxy)benzonitriloxide.

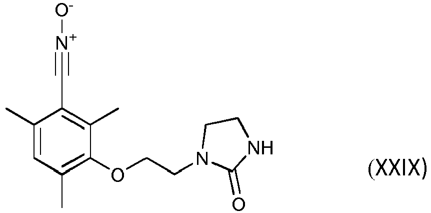

Selon la deuxième alternative de la troisième variante de l'invention mettant en oeuvre comme agent de modification une nitrone, Q comporte préférentiellement le motif répondant à la formule (XXXV) ou (XXXVI) 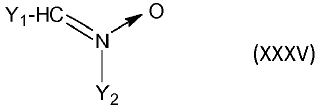 où : 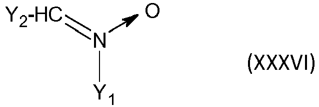
Y₁ est un groupe aliphatique, préférentiellement un groupe alkyle contenant de préférence 1 à 12 atomes de carbone, ou un groupe contenant 6 à 20 atomes de carbone et comportant un motif aromatique, préférentiellement un groupe aryle ou alkylaryle, plus préférentiellement un groupe phényle ou tolyle,
et Y₂ est un groupe aliphatique, préférentiellement un groupe hydrocarboné saturé contenant de préférence 1 à 12 atomes de carbone, ou un groupe comportant un motif aromatique et contenant préférentiellement 6 à 20 atomes de carbone, Y₂ comportant un rattachement direct à B.

Selon cette deuxième alternative conviennent par exemple les composés 1,3-dipolaires de formule (XXXVII) à (XLI) : 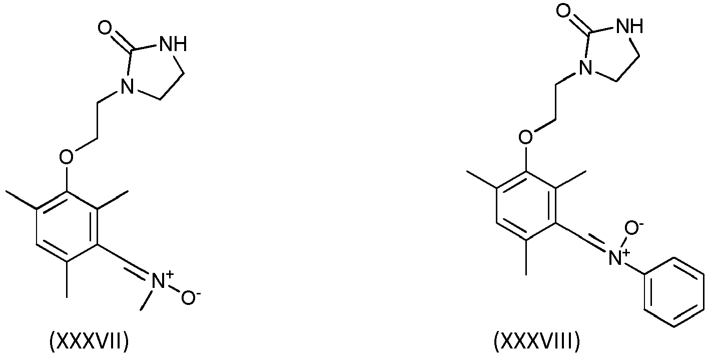 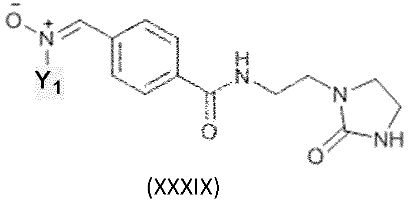 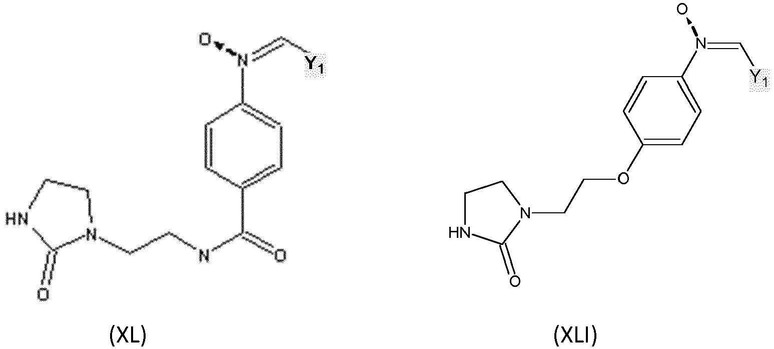 avec Y₁ étant tel que défini précédemment, à savoir un groupe aliphatique, préférentiellement un groupe alkyle contenant de préférence 1 à 12 atomes de carbone, ou un groupe contenant 6 à 20 atomes de carbone et comportant un motif aromatique, préférentiellement un groupe aryle ou alkylaryle, plus préférentiellement un groupe phényle ou tolyle.

Ces composés utiles aux besoins de la troisième variante de l'invention peuvent être préparés selon les procédés décrits dans la demande de brevet WO 2012007441.

Selon la troisième variante de l'invention, quelles que soient ses alternatives, le greffage de l'agent de modification est effectué par cycloaddition [3+2] du ou des groupes réactifs de l'agent de modification et une ou plusieurs doubles liaisons carbone carbone de la chaîne du polymère diénique de départ. Le produit de réaction d'un oxyde de nitrile, d'une nitrone et d'une imine de nitrile par exemple sur une unité 1,4-butadiène peut être illustré par les équations suivantes, dans lesquelles le symbole ¤ représente un quelconque substituant :
- Cycloaddition d'un oxyde de nitrile sur une unité butadiène 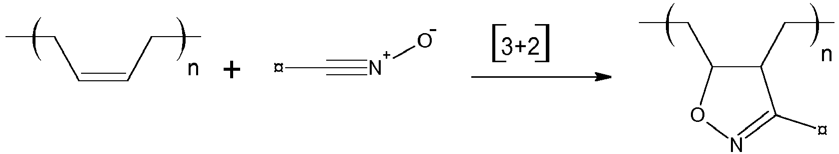
- Cycloaddition d'une nitrone sur une unité butadiène 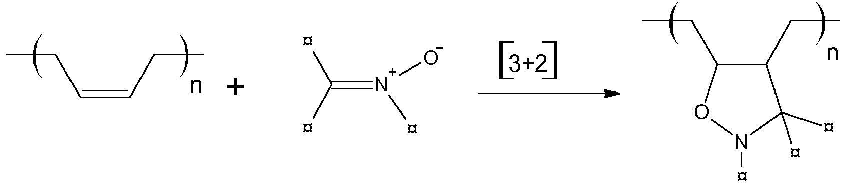
- Cycloaddition d'une nitrile imine sur une unité butadiène

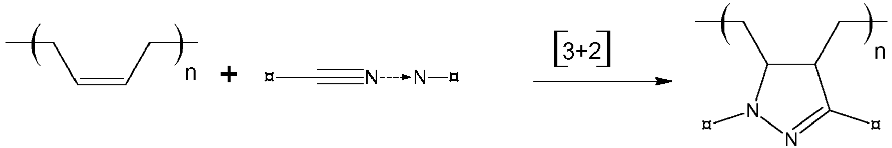

Selon l'une quelconque des trois variantes de l'invention, le greffage de l'agent de modification peut être réalisé en masse ou en solution. Lorsqu'il est réalisé en masse, par exemple dans un mélangeur interne ou un mélangeur externe tel qu'un mélangeur à cylindres, le greffage est alors mis en oeuvre soit à une température du mélangeur externe ou du mélangeur interne inférieure à 60°C, suivi d'une étape de réaction sous presse ou en étuve à des températures allant de 80°C à 200°C, soit à une température du mélangeur externe ou du mélangeur interne supérieure à 60°C sans traitement thermique postérieur. Selon la première variante de l'invention qui met en oeuvre un agent de modification contenant une fonction SH, le greffage de l'agent de modification sur une ou les doubles liaisons carbone carbone du polymère diénique de départ peut se faire en présence de peroxyde, comme cela est décrit par exemple dans la demande de brevet WO2011113818.

Le procédé de greffage peut être effectué en continu ou en discontinu. Si le greffage a lieu en solution, le polymère ainsi greffé peut être séparé de sa solution par tout type de moyen connu par l'homme de l'art et en particulier par une opération de stripping à la vapeur d'eau.

Selon l'un quelconque des modes de réalisation du procédé conforme à l'invention, qu'il s'agisse de la première, deuxième ou troisième variante, la quantité d'agent de modification mise à réagir varie préférentiellement de 0.01 à 50, plus préférentiellement de 0.01 à 10, encore plus préférentiellement de 0.03 à 5, mieux de 0.03 à 3 équivalents molaires de groupe associatif A pour 100 moles d'unités monomères du polymère diénique de départ.

Le polymère diénique de départ comprend les unités UA, UB, UC et UD suivantes, distribuées statistiquement au sein du polymère diénique de départ,

| | | |
|---|---|---|
| UA) | -CH₂-CH₂- | selon un pourcentage molaire de m'% |
| UB) | -CH₂-R₁C=CR₂-CH₂- | selon un pourcentage molaire de n'% |
| UC) | 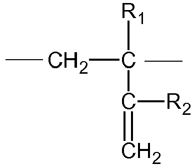 | selon un pourcentage molaire de o'% |
| UD) | 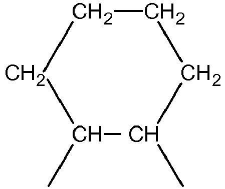 | selon un pourcentage molaire de p'% |

▪ R₁ et R₂, identiques ou différents, désignant un atome d'hydrogène, un radical méthyle ou un radical phényle substitué ou non en position ortho, méta ou para par un radical méthyle,
▪ m' ≥ 50
▪ 0 < o' + p' ≤ 25
▪ n' + o' > 0
▪ m', n', o' et p' étant des nombres allant de 0 à 100
▪ les pourcentages molaires respectifs de m', n', o', et p' étant calculés sur la base de la somme de m' + n' + o' + p' qui est égale à 100.

Selon un mode de réalisation particulier de l'invention, le polymère diénique de départ contient des unités UE distribuées statistiquement au sein du polymère diénique de départ :

| | | |
|---|---|---|
| UE) | 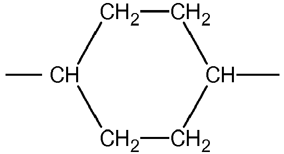 | selon un pourcentage molaire de q'% |

▪ o' + p' + q' ≥ 10
▪ q' ≥ 0
▪ les pourcentages molaires respectifs de m', n', o', p' et q' étant calculés sur la base de la somme de m' + n' +o' + p' + q' qui est égale à 100.

Alors que le motif de l'unité UD forme un cycle hydrocarboné bivalent à 6 atomes de carbone de type 1,2-cyclohexane, le motif de l'unité UE forme un cycle hydrocarboné bivalent à 6 atomes de carbone de type 1,4-cyclohexane.

Selon un autre mode de réalisation particulier de l'invention, le polymère diénique de départ contient des unités UF distribuées statistiquement au sein du polymère diénique de départ :

| | | |
|---|---|---|
| Uf) | 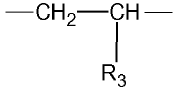 | selon un pourcentage molaire de r'% |

▪ R₃ désignant un radical alkyle ayant de 1 à 4 atomes de carbone ou un radical aryle,
▪ 0 ≤ r' ≤ 25, de préférence 0 ≤ r' ≤ 10,
▪ les pourcentages molaires respectifs de m', n', o', p' et r' étant calculés sur la base de la somme de m' + n' + o' + p' + r' qui est égale à 100.

Selon ce mode de réalisation particulier de l'invention, le polymère diénique de départ peut comprendre q'% molaire d'unités UE distribuées statistiquement au sein du polymère diénique de départ, auquel cas les pourcentages molaires respectifs de m', n', o', p', q' et r' sont calculés sur la base de la somme de m'+ n' + o' + p' + q' + r' qui est égale à 100.

Selon l'un quelconque des modes de réalisation de l'invention, de préférence le polymère diénique de départ ne contient pas d'unité UF.

Selon l'un quelconque des modes de réalisation de l'invention, au moins l'un des deux pourcentages molaires p' et q' est de préférence différent de 0. Autrement dit, de préférence le polymère diénique de départ contient au moins l'un des motifs qui sont un cycle hydrocarboné bivalent à 6 atomes de carbone de type 1,2-cyclohexane et un cycle hydrocarboné bivalent à 6 atomes de carbone de type 1,4-cyclohexane.

Selon l'un quelconque des modes de réalisation de l'invention, de manière plus préférentielle p' est strictement supérieur à 0.

Selon un mode de réalisation de l'invention, le polymère diénique de départ contient comme unités monomères uniquement les unités UA, UB, UC, UD et UE selon leur pourcentage molaire respectif m', n', o', p' et q', de préférence tous différents de 0.

Selon un autre mode de réalisation de l'invention, le polymère diénique de départ contient comme unités monomères uniquement les unités UA, UB, UC et UD selon leur pourcentage molaire respectif m', n', o' et p', de préférence tous différents de 0.

Selon l'un quelconque des modes de réalisations de l'invention, les unités UB présentes dans le polymère diénique de départ ont de préférence la configuration trans représentée par la formule suivante :

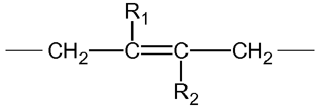

Le polymère diénique de départ peut être obtenu selon différentes méthodes de synthèses connues de l'homme du métier, notamment en fonction des valeurs visées de m', n', o', p', q' et r'. Généralement, le polymère diénique de départ peut être préparé par copolymérisation d'au moins un monomère diène conjugué et d'éthylène et selon des méthodes de synthèse connues, en particulier en présence de système catalytique comprenant un complexe métallocène. On peut citer à ce titre les complexes métallocènes décrits dans les documents EP 092 731 A1, EP 1 554 321 A1, EP 1 656 400 A1, EP 1 829 901 A1, EP 1 954 705 A1, EP 1 957 506 A1, au nom des Demanderesses.

Dans la synthèse du polymère diénique de départ, à titre de monomère diène conjugué convient notamment un diène conjugué ayant de 4 à 12 atomes de carbone. On peut citer le 1,3-butadiène, le 2-méthyl-1,3-butadiène, 2,3-diméthyl-1,3-butadiène, un aryl-1,3-butadiène, le 1,3-pentadiène Selon un aspect préférentiel, le monomère diène est le 1,3-butadiène ou du 2-méthyl-1,3-butadiène, plus préférentiellement le 1,3-butadiène, auquel cas R₁ et R₂ représentent chacun un hydrogène.

Ainsi, selon certaines de ces méthodes de synthèse, le polymère diénique de départ peut être obtenu par copolymérisation d'au moins un monomère diène conjugué et de l'éthylène, en présence d'un système catalytique comprenant un complexe métallocène de lanthanide avec des ligands *ansa* de type fluorényle. On peut citer à ce titre les complexes métallocènes décrits dans les documents EP 1 092 731 A1, EP 1 554 321 A1, EP 1 954 705 A1.

Le polymère diénique de départ qui contient des unités UF selon un mode de réalisation particulier de l'invention peut être obtenu par copolymérisation d'au moins un monomère diène conjugué et de deux oléfines, telles que l'éthylène et une alpha-oléfine, en présence d'un système catalytique comprenant un complexe métallocène de lanthanide avec des ligands de type *ansa* cyclopentadiényle-fluorényle. A titre de monomère alpha-oléfine convient par exemple une alpha-oléfine ayant de 3 à 18 atomes de carbone, avantageusement ayant 3 à 6 atomes de carbone. On peut citer le propylène, le butène, le pentène, l'hexène ou un mélange de ces composés. Comme termonomère associé à au moins un monomère diène conjugué et l'éthylène, on peut aussi citer un dérivé du styrène. Les systèmes catalytiques à base de complexes métallocènes peuvent être ceux décrits dans les documents EP 1 092 731 A1, EP 1 656 400 A1, EP 1 829 901 A1, EP 1 957 506 A1, au nom des Demanderesses.

Selon l'un quelconque des modes de réalisation de l'invention, le polymère diénique de départ présente de préférence une masse molaire moyenne en nombre (Mn) d'au moins 60 000 g/mol et d'au plus 1 500 000 g/mol. Le polymère diénique de départ utile aux besoins de l'invention présente de préférence un indice de polydispersité Ip, égal à Mw/Mn (Mw étant la masse molaire moyenne en poids) compris entre 1,20 et 3,00. Les valeurs de Mn, Mw et Ip sont mesurées selon la méthode décrite dans le paragraphe II.1.

Selon l'un quelconque des modes de réalisation de l'invention, le polymère diénique de départ est de préférence un élastomère.

Le polymère conforme à l'invention, en particulier élastomère, peut être utilisé dans une composition qui comporte tout type de charge dite renforçante, connue pour ses capacités à renforcer une composition de caoutchouc utilisable pour la fabrication de pneumatiques, un noir de carbone, une charge inorganique renforçante telle que de la silice à laquelle est associé de manière connue un agent de couplage, ou encore un mélange de ces deux types de charge.

Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

De manière préférentielle, le taux de charge renforçante totale (noir de carbone et/ou charge inorganique renforçante telle que silice) est compris entre 20 et 200 pce, plus préférentiellement entre 30 et 150 pce, l'optimum étant de manière connue différent selon les applications particulières visées

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM).

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noire" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

Conviennent en particulier, sans que la définition ci-après soit limitative, des silanes polysulfurés répondant à la formule générale (I) suivante:

(I) Z-A-Sₓ-A-Z, dans laquelle:

- x est un entier de 2 à 8 (de préférence de 2 à 5) ;
- les symboles A, identiques ou différents, représentent un radical hydrocarboné divalent (de préférence un groupe alkylène en C₁-C₁₈ ou un groupe arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 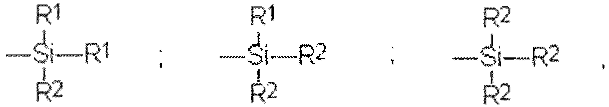 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. A titre d'exemples d'autres organosilanes, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080, WO 2010/072685 et WO 2008/055986.

La teneur en agent de couplage est avantageusement inférieure à 20 pce, étant entendu qu'il est en général souhaitable d'en utiliser le moins possible. Typiquement le taux d'agent de couplage représente 0,5% à 15% en poids par rapport à la quantité de charge inorganique. Son taux est préférentiellement compris entre 0,5 et 12 pce, plus préférentiellement compris dans un domaine allant de 3 à 10 pce. Ce taux est aisément ajusté par l'homme du métier selon le taux de charge inorganique utilisé dans la composition.

Le système de réticulation peut être à base soit de soufre, soit de donneurs de soufre et/ou de peroxyde et/ou de bismaléimides.
Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine), ou encore des retardateurs de vulcanisation connus.

Le soufre est utilisé à un taux préférentiel de 0,5 à 12 pce, en particulier de 1 à 10 pce. L'accélérateur primaire de vulcanisation est utilisé à un taux préférentiel compris entre 0,5 et 10 pce, plus préférentiellement compris entre 0,5 et 5 pce.

La composition de caoutchouc conforme à l'invention peut comporter également tout ou partie des additifs usuels habituellement utilisés dans les compositions d'élastomères destinées à constituer des mélanges externes d'articles finis en caoutchouc tels que des pneumatiques, en particulier de bandes de roulement, comme par exemple des plastifiants ou des huiles d'extension, que ces derniers soient de nature aromatique ou non-aromatique, notamment des huiles très faiblement ou non aromatiques (e.g., huiles paraffiniques, naphténiques hydrogénées, huiles MES ou TDAE), des huiles végétales, en particulier les esters de glycérol comme les trioléates de glycérol, des pigments, des agents de protection tels que cires anti-ozone, anti-ozonants chimiques, anti-oxydants, des agents anti-fatigue, des résines renforçantes (tels que résorcinol ou bismaléimide), des accepteurs (par exemple résine phénolique novolaque) ou des donneurs de méthylène (par exemple HMT ou H3M) tels que décrits par exemple dans la demande WO 02/10269.

La composition de caoutchouc selon l'invention peut être fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé l'agent de réticulation chimique, en particulier le système de vulcanisation.

La composition de caoutchouc conforme à l'invention, peut être soit à l'état cru (avant réticulation ou vulcanisation), soit à l'état cuit (après réticulation ou vulcanisation), peut être un produit semi-fini qui peut être utilisé dans un pneumatique, notamment dans une bande de roulement de pneumatique.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

### II.1-Mesures et tests utilisés :

### Température de transition vitreuse

Les températures de transition vitreuse, Tg, des polymères sont mesurées au moyen d'un calorimètre différentiel (" differential scanning calorimeter "). L'analyse est réalisée selon les requis de la norme ASTM D3418-08.

### Chromatographie d'exclusion stérique

On utilise la chromatographie d'exclusion stérique ou SEC (Size Exclusion Chromatography). La SEC permet de séparer les macromolécules en solution suivant leur taille à travers des colonnes remplies d'un gel poreux. Les macromolécules sont séparées suivant leur volume hydrodynamique, les plus volumineuses étant éluées en premier. Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.
Préparation du polymère: Il n'y a pas de traitement particulier de l'échantillon de polymère avant analyse. Celui-ci est simplement solubilisé, dans du (tétrahydrofuranne + 1%vol. de diisopropylamine + 1%vol. de triéthylamine + 1%vol. d'eau distillée) ou dans du chloroforme, à une concentration d'environ 1 g/l. Puis la solution est filtrée sur filtre de porosité 0,45µm avant injection.
Analyse SEC: L'appareillage utilisé est un chromatographe « WATERS alliance ». Le solvant d'élution est du tétrahydrofuranne + 1%vol. de diisopropylamine + 1%vol. de triéthylamine ou du chloroforme selon le solvant utilisé pour la mise en solution du polymère. Le débit est de 0,7 ml/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».

Le volume injecté de la solution de l'échantillon de polymère est 100 µl. Le détecteur est un réfractomètre différentiel « WATERS 2410 » et le logiciel d'exploitation des données chromatographiques est le système « WATERS EMPOWER».

Les masses molaires moyennes calculées sont relatives à une courbe d'étalonnage réalisée à partir de polystyrènes étalons commerciaux « PSS READY CAL-KIT ».

### Analyse RMN ¹H

La détermination du taux molaire de composé oxyde de nitrile greffé est réalisée par une analyse RMN. Les spectres sont acquis sur un spectromètre 500 MHz BRUKER équipé d'une sonde " large bande " BBlz-grad 5 mm. L'expérience RMN ¹H quantitative, utilise une séquence simple impulsion 30° et un délai de répétition de 3 secondes entre chaque acquisition. Les échantillons sont solubilisés dans le sulfure de carbone (CS₂). 100 µL de cyclohexane deutéré (C₆D₁₂) sont ajoutés pour le signal de lock.

Le spectre RMN ¹H permet de quantifier les motifs oxyde de nitrile greffés par intégration des signaux caractéristiques des protons CH₂N et CH₂O qui apparaissent à un déplacement chimique compris entre δ=3.1-3,8ppm

Le spectre RMN 2D HSQC ¹H-¹³C permet de vérifier la nature du motif greffé grâce aux déplacements chimiques des atomes de carbone et de proton.

### Propriétés dynamiques

Les propriétés dynamiques G* et tan(δ)max sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99. On effectue un balayage en amplitude de déformation de 0,1% à 100% (cycle aller), puis de 100% à 0,1% (cycle retour). Les résultats exploités sont le module complexe de cisaillement dynamique (G*) et le facteur de perte tan(δ). Pour le cycle retour, on indique la valeur maximale de tan(δ) observée, noté tan(δ)max.

### II.2- Préparation des polymères greffés :

### II.2.1- Préparation du polymère E1-g, non conforme à l'invention, par greffage d'un composé 1,3-dipolaire :

Le polymère non conforme à l'invention, E1-g, est un copolymère de 1,3-butadiène et de styrène, SBR, contenant 26% en masse d'unité styrène et 24% en moles d'unité butadiène 1,2 de la partie butadiénique, de Mn = 163 000 g/mol, de Ip = 1.15 et de Tg = -48°C.

On incorpore du 2,4,6-triméthyl-3-(2-(2-oxoimidazolidin-1-yl)éthoxy)benzonitroxide (0.85 g, 2.93 mmol), de pureté RMN de 94%mol, à 60 g de polymère diénique de départ E1 sur outil à cylindres (mélangeur externe à 30°C). Le mélange est homogénéisé en 15 passes portefeuille. Cette phase de mélangeage est suivie d'un traitement thermique sous presse à 10 bars de pression et à 120°C, pendant 10 minutes. On obtient le polymère E1-g.

Le taux molaire de greffage déterminé par RMN ¹H est de 0.28% (0.28 mole d'agent de modification greffé pour 100 moles d'unité monomère de polymère), soit un rendement de greffage de 94%.

### II.2.2- Préparation du polymère E2-g, conforme à l'invention, par greffage d'un composé 1,3-dipolaire :

Le polymère conforme à l'invention, E2-g, est préparé par greffage du composé 2,4,6-triméthyl-3-(2-(2-oxoimidazolidin-1-yl)éthoxy)benzonitroxide sur un polymère diénique de départ E2.
Le polymère diénique de départ E2 est un copolymère de 1,3-butadiène et d'éthylène comportant 66% molaire d'unité éthylène, le complément à 100% étant constitué par les unités butadiène, réparties sous forme -1,2 (46.4% molaire des unités butadiène), -1,4 (31.8% molaire des unités butadiène) et -1,2-cyclohexyl (21.8 % molaire des unités butadiène), et présente une Mn de 175 000 g/mol, un Ip de 1.79 et une Tg de -43°C. Le polymère diénique de départ E2 est préparé selon un procédé de polymérisation conforme à l'exemple 4-2 décrit dans le brevet EP 1 954 705 B1 au nom des Demanderesses.

On incorpore du 2,4,6-triméthyl-3-(2-(2-oxoimidazolidin-1-yl)éthoxy)benzonitroxide (1.45 g, 5.03 mmol), de pureté RMN de 94%mol, à 60 g de polymère diénique de départ E2 sur outil à cylindres (mélangeur externe à 30°C). Le mélange est homogénéisé en 15 passes portefeuille. Cette phase de mélangeage est suivie d'un traitement thermique sous presse à 10 bars de pression à 120°C, pendant 10 minutes. On obtient le polymère E2-g.
Le taux molaire de greffage déterminé par RMN ¹H est de 0.29% (0.29 mole d'agent de modification greffé pour 100 moles d'unité monomère de polymère), soit un rendement de greffage de 97%.

### 11.3-Préparation des compositions de caoutchouc :

Les polymères E1-g et E2-g sont utilisés pour la préparation des compositions de caoutchouc C1 et C2. Il est à noter que E1-g et E2-g sont des polymères élastomères.

Les formulations (en pce) des compositions C1 et C2 sont décrites dans le tableau I. Les compositions sont identiques, hormis la nature du polymère. La composition C contient le polymère E1-g (le SBR greffé), la composition C2 contient le polymère E2-g (le copolymère de 1,3-butadiène et d'éthylène greffé).

Les compositions de caoutchouc sont préparées de la manière suivante : on introduit dans un mélangeur interne Polylab de 85cm³, rempli à 70% et dont la température initiale de cuve est d'environ 110°C, le polymère greffé, la charge renforçante, l'agent de couplage puis, après une à deux minutes de malaxage, les divers autres ingrédients à l'exception du système de vulcanisation. On conduit alors un travail thermomécanique (phase non-productive) en une étape (durée totale du malaxage égale à environ 5 min), jusqu'à atteindre une température maximale de "tombée" de 160°C. On récupère le mélange ainsi obtenu, on le refroidit puis on ajoute le système de vulcanisation (soufre) sur un mélangeur externe (homo-finisseur) à 25°C, en mélangeant le tout (phase productive) pendant environ 5 à 6 min.

### II.4-Propriétés à cuit des compositions de caoutchouc :

Les compositions après vulcanisation, sont calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement. Les résultats sont consignés dans le tableau (II).

La composition C2 présente à la fois un haut niveau de rigidité à cuit et un très faible niveau d'hystérèse, comparativement à la composition C1 non conforme à l'invention. L'utilisation combinée de l'élastomère E2 et de l'agent de modification permet une diminution de 20% de tanδₘₐₓ à 23°C par rapport à l'utilisation combinée de E1 et du même agent de modification, alors que les deux élastomères E1 et E2 sont de même Tg et que l'agent de modification est utilisé à un même taux molaire dans les compositions C1 et C2. Ce résultat est d'autant plus remarquable que ce gain en hystérèse s'accompagne aussi d'une augmentation de 30% du module complexe de cisaillement G* à 23°C à 50% de déformation. Ce compromis de propriétés de la composition de caoutchouc entre l'hystérèse et la rigidité à cuit augure un compromis amélioré entre les performances que la résistance au roulement et l'usure, notamment pour une bande de roulement de pneumatique.

**Tableau I**

| Composition | C1 | C2 |
|---|---|---|
| Elastomère E1-g | 100 | - |
| Elastomère E2-g | - | 100 |
| Noir de carbone (1) | 3.00 | 3.00 |
| Silice (2) | 90.00 | 90.00 |
| Silane (3) | 7.20 | 7.20 |
| DPG (4) | 1.60 | 1.60 |
| Plastifiant | 31.50 | 31.50 |
| Cire anti ozone | 1.65 | 1.65 |
| Antioxydant | 2.00 | 2.00 |
| Acide stéarique | 2.00 | 2.00 |
| ZnO | 2.00 | 2.00 |
| Soufre | 1.30 | 1.30 |
| Accélérateur | 2.00 | 2.00 |

| | | |
|---|---|---|
| 1) N330 2) *Silice" Zeosil 1165 MP" société Rhodia sous forme de microperles* 3) *TESPT ("Si69" société Degussa)* 4) *Diphénylguanidine (« Perkacit DPG » de la société Flexsys)* | | |

**Tableau 2**

| Propriétés à cuit | C1 | C2 |
|---|---|---|
| G*_{(50%)} (MPa) | 100 | 130 |
| Tanδₘₐₓ | 100 | 80 |

## Revendications

1. Polymère qui comprend les unités UA, UB, UC et UD suivantes et au moins une unité portant un motif F,
| | | |
|---|---|---|
| UA) | -CH₂-CH₂- | selon un pourcentage molaire de m% |
| UB) | -CH₂-R₁C=CR₂-CH₂- | selon un pourcentage molaire de n% |
| UC) | 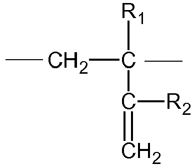 | selon un pourcentage molaire de o% |
| UD) | 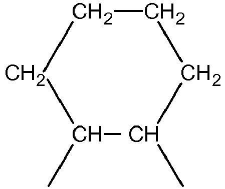 | selon un pourcentage molaire de p% |
▪ lesquelles unités UA, UB, UC et UD sont distribuées statistiquement au sein du polymère
▪ le motif F étant pendant le long de la chaîne du polymère et portant un groupe associatif comprenant au moins un atome d'azote,
▪ l'unité portant le motif F étant présente dans la chaîne polymère selon un pourcentage molaire de f%,
▪ R₁ et R₂, identiques ou différents, désignant un atome d'hydrogène, un radical méthyle ou un radical phényle substitué ou non en position ortho, méta ou para par un radical méthyle,
▪ m ≥ 50
▪ n ≥ 0
▪ o ≥ 0
▪ f > 0
▪ 0 < o + p ≤ 25
▪ m, n, o, p et f étant des nombres allant de 0 à 100
▪ les pourcentages molaires respectifs de m, n, o, p et f étant calculés sur la base de la somme de m + n + o + p + f qui est égale à 100,
- le groupe associatif répondant à l'une des formules (I) à (V) suivantes : 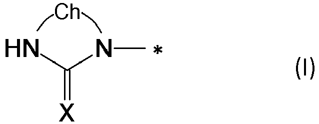 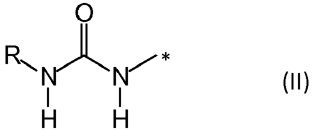 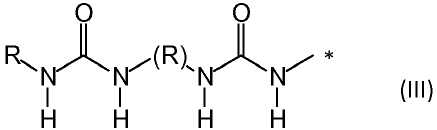 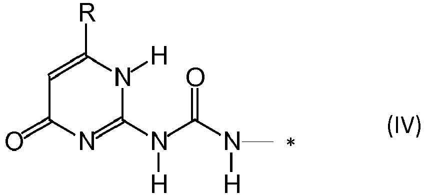 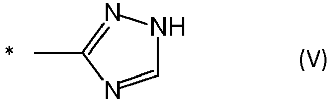 où :
- Ch désigne une chaîne carbonée pouvant éventuellement contenir des hétéroatomes,
- * représente un rattachement direct ou indirect à la chaîne du polymère,
- R désigne un groupe hydrocarboné pouvant éventuellement contenir des hétéroatomes,
- X désigne un atome d'oxygène ou de soufre ou un groupe NH, de préférence un atome d'oxygène.

2. Polymère selon la revendication 1 qui contient des unités UE suivantes distribuées statistiquement au sein du polymère,
| | | |
|---|---|---|
| UE) | 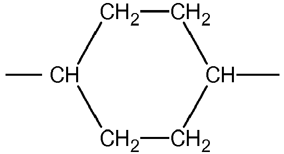 | selon un pourcentage molaire de q% |
▪ o + p + q ≥ 10
▪ q ≥ 0
▪ les pourcentages molaires respectifs de m, n, o, p, q et f étant calculés sur la base de la somme de m + n + o + p + q +f qui est égale à 100.

3. Polymère selon la revendication 2 qui contient des unités UF suivantes distribuées statistiquement au sein du polymère,
| | | |
|---|---|---|
| UF) | 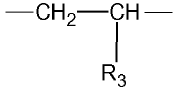 | selon un pourcentage molaire de r% |
▪ R₃ désignant un radical alkyle ayant de 1 à 4 atomes de carbone ou un radical aryle,
▪ 0≤ r ≤25.
▪ les pourcentages molaires respectifs de m, n, o, p, q, r et f étant calculés sur la base de la somme de m+ n + o + p + q + r + f qui est égale à 100.

4. Polymère selon l'une quelconque des revendications 1 à 3 dans lequel au moins l'un des deux pourcentages n et o est différent de 0.

5. Polymère selon l'une quelconque des revendications 1 à 4 dans lequel n et o sont différents de 0.

6. Polymère selon l'une quelconque des revendications 1 à 5 dans lequel au moins l'un des deux pourcentages molaires p et q n'est pas égal à 0.

7. Polymère selon l'une quelconque des revendications 1 à 6 dans lequel R₁ et R₂ sont identiques et désignent un atome d'hydrogène.

8. Polymère selon l'une quelconque des revendications 1 à 7 dans lequel f varie de 0.01 à 50%, de manière préférentielle de 0.01 à 10%, de manière plus préférentielle de 0.03 à 5%, de manière encore plus préférentielle de 0.03 à 3%.

9. Polymère selon l'une quelconque des revendications 1 à 8 dans lequel le groupe associatif répond à la formule (VI) 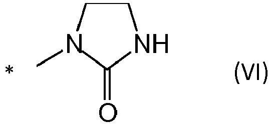 où * représente un rattachement direct ou indirect à la chaîne du polymère.

10. Polymère selon l'une quelconque des revendications 1 à 9 qui est un élastomère.

11. Procédé pour préparer un polymère modifié par greffage, lequel procédé comprend la réaction d'un polymère diénique de départ avec un agent de modification, lequel polymère diénique de départ comprend les unités UA, UB, UC et UD suivantes, lequel agent de modification comprend d'une part un groupe associatif comprenant au moins un atome d'azote et d'autre part un motif G contenant un groupe réactif vis-à-vis de la chaîne du polymère diénique de départ, les unités UA, UB, UC et UD étant présentes dans le polymère diénique de départ selon les pourcentages molaires respectifs m', n', o' et p', et étant distribuées statistiquement au sein du polymère diénique de départ,
| | |
|---|---|
| UA) | -CH₂-CH₂- |
| UB) | -CH₂-R₁C=CR₂-CH₂- |
| UC) | 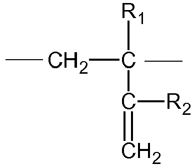 |
| UD) | 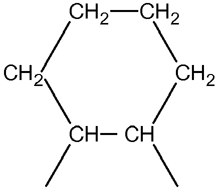 |
▪ R₁ et R₂, identiques ou différents, désignant un atome d'hydrogène, un radical méthyle ou un radical phényle substitué ou non en position ortho, méta ou para par un radical méthyle,
▪ m' ≥ 50
▪ 0 < o' + p' ≤ 25
▪ n' + o' >0
▪ m', n', o' et p' étant des nombres allant de 0 à 100
▪ les pourcentages molaires respectifs de m', n', o', et p' étant calculés sur la base de la somme de m' + n' + o' + p' qui est égale à 100
le groupe associatif comprenant au moins un atome d'azote et répondant à l'une des formules (IX) à (XIII) 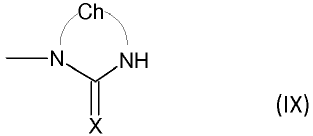 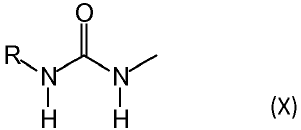 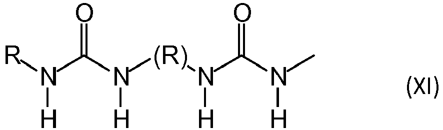 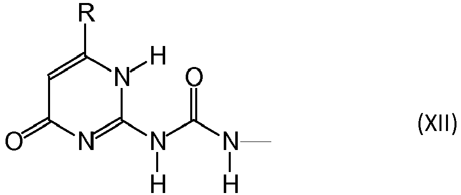 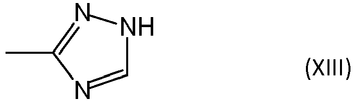 où :
▪ X désigne un atome d'oxygène ou de soufre ou un groupe -NH, de préférence un atome d'oxygène,
▪ R désigne un groupe hydrocarboné pouvant éventuellement contenir des hétéroatomes.

12. Procédé selon la revendication 11 dans lequel G désigne un motif contenant un groupe réactif vis-à-vis d'au moins une unité diénique du polymère diénique de départ.

13. Procédé selon la revendication 11 dans lequel le groupe réactif contenu dans G est choisi dans le groupe constitué par la fonction SH, le groupe azo-dicarbonyle et un dipôle contenant au moins et de préférence un atome d'azote.

14. Procédé selon l'une quelconque des revendications 11 à 13 dans lequel l'agent de modification est de préférence un oxyde de nitrile, une nitrone ou une nitrile imine.

15. Procédé selon la revendication 14 dans lequel l'agent de modification est l'un des composés 1,3-dipolaires de formule (XXIX) à (XXXIV) :

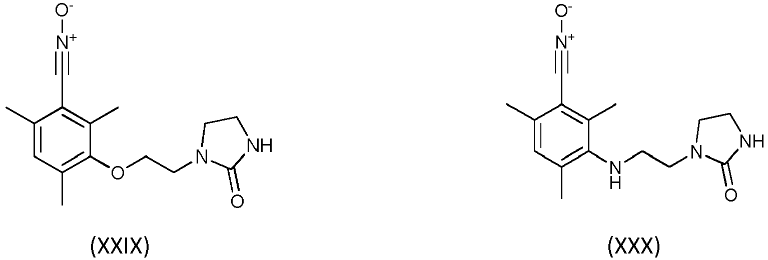

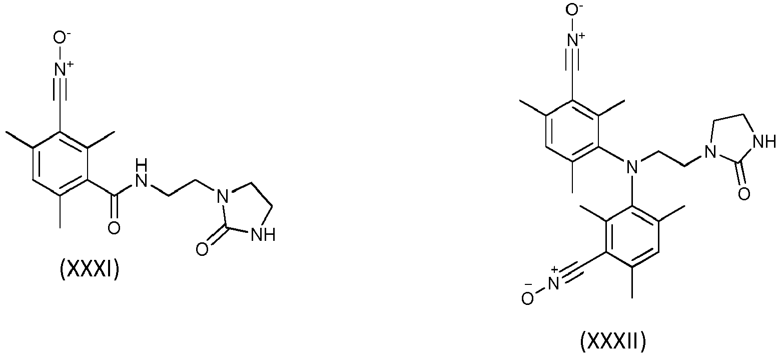

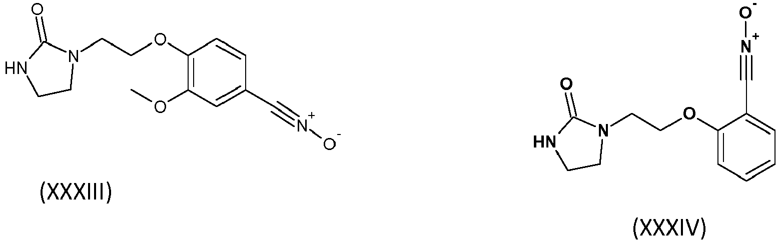

16. Procédé selon la revendication 14 dans lequel l'agent de modification est l'un des composés 1,3-dipolaires de formule (XXXVII) à (XLI) : 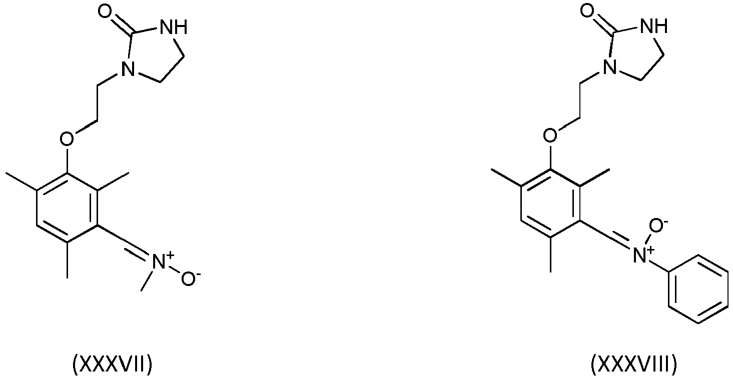 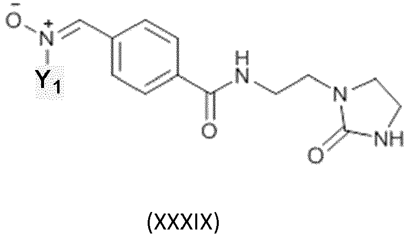 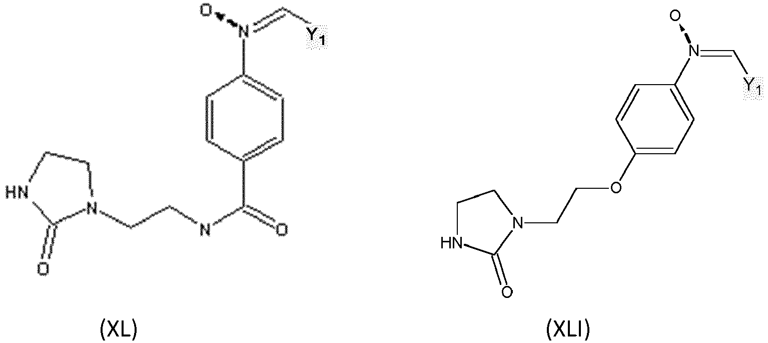 Y₁ étant un groupe aliphatique, préférentiellement un groupe alkyle ou un groupe contenant 6 à 20 atomes de carbone et comportant un motif aromatique.

17. Composition de caoutchouc qui comprend une charge renforçante et un élastomère défini selon la revendication 10.

18. Pneumatique qui comprend une composition de caoutchouc selon la revendication 17.

## Patentansprüche

1. Polymer, das die folgenden Einheiten UA, UB, UC und UD und mindestens eine Einheit mit einer Untereinheit F umfasst,
UA) -CH₂-CH₂- gemäß einem Molprozentanteil von m %
UB) -CH₂-R₁C=CR₂-CH₂- gemäß einem Molprozentanteil von n %
UC) 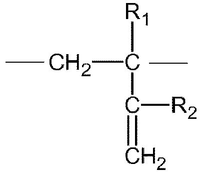 gemäß einem Molprozentanteil von o %
UD) 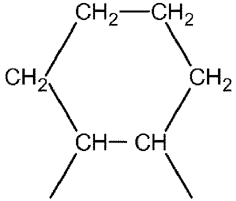 gemäß einem Molprozentanteil von p %,
▪ wobei die Einheiten UA, UB, UC und UD in dem Polymer statistisch verteilt sind,
▪ wobei die Untereinheit F seitenständig entlang der Kette des Polymers ist und eine assoziative Gruppe mit mindestens einem Stickstoffatom trägt,
▪ wobei die Einheit mit einer Untereinheit F in der Polymerkette gemäß einem Molprozentanteil von f % vorliegt,
▪ wobei R₁ und R₂ gleich oder verschieden sind und für ein Wasserstoffatom, einen Methylrest oder einen Phenylrest, der gegebenenfalls in ortho-, meta- oder para-Position durch einen Methylrest substituiert ist, stehen,
▪ m ≥ 50,
▪ n ≥ 0,
▪ o ≥ 0,
▪ f > 0,
▪ 0 < o + p ≤ 25
▪ wobei m, n, o, p und f Zahlen im Bereich von 0 bis 100 sind,
▪ wobei die jeweiligen Molprozentanteile von m, n, o, p und f auf der Basis der Summe von m + n + o + p + f, die gleich 100 ist, berechnet werden,
- wobei die assoziative Gruppe einer der folgenden Formeln (I) bis (V) entspricht: 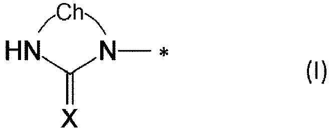 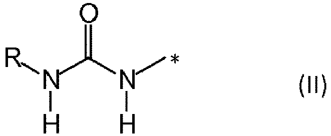 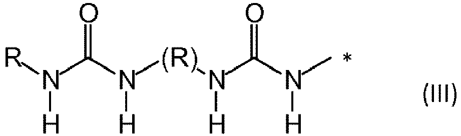 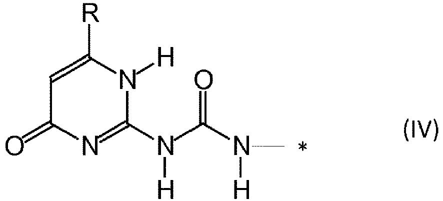 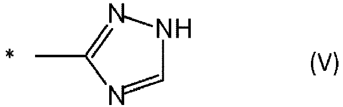 wobei:
- Ch für eine Kohlenstoffkette, die gegebenenfalls Heteroatome enthalten kann, steht,
- * für eine direkte oder indirekte Verknüpfung mit der Polymerkette steht,
- R für eine Kohlenwasserstoffgruppe, die gegebenenfalls Heteroatome enthalten kann, steht,
- X für ein Sauerstoff- oder Schwefelatom oder eine NH-Gruppe, vorzugsweise ein Sauerstoffatom, steht.

2. Polymer nach Anspruch 1, das die folgenden Einheiten UE enthält, die in dem Polymer statistisch verteilt sind,
UE) 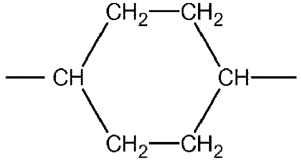 gemäß einem Molprozentanteil von q %
▪ o + p + q ≥ 10,
▪ q ≥ 0,
▪ wobei die jeweiligen Molprozentanteile von m, n, o, p, q und f auf der Basis der Summe von m + n + o + p + q + f, die gleich 100 ist, berechnet werden.

3. Polymer nach Anspruch 2, das die folgenden Einheiten UF enthält, die in dem Polymer statistisch verteilt sind,
| | | |
|---|---|---|
| UF) | 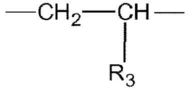 | gemäß einem Molprozentanteil von r % |
▪ wobei R₃ für einen Alkylrest mit 1 bis 4 Kohlenstoffatomen oder einen Arylrest steht,
▪ 0 ≤ r ≤ 25,
▪ wobei die jeweiligen Molprozentanteile von m, n, o, p, q, r und f auf der Basis der Summe von m + n + o + p + q + r + f, die gleich 100 ist, berechnet werden.

4. Polymer nach einem der Ansprüche 1 bis 3, wobei mindestens einer der beiden Molprozentanteile n und o von 0 verschieden ist.

5. Polymer nach einem der Ansprüche 1 bis 4, wobei n und o von 0 verschieden sind.

6. Polymer nach einem der Ansprüche 1 bis 5, wobei mindestens einer der beiden Molprozentanteile p und q nicht gleich 0 ist.

7. Polymer nach einem der Ansprüche 1 bis 6, wobei R₁ und R₂ gleich sind und für ein Wasserstoffatom stehen.

8. Polymer nach einem der Ansprüche 1 bis 7, wobei f von 0,01 bis 50 %, vorzugsweise von 0,01 bis 10 %, weiter bevorzugt von 0,03 bis 5 % und noch weiter bevorzugt von 0,03 bis 3 % variiert.

9. Polymer nach einem der Ansprüche 1 bis 8, wobei die assoziative Gruppe der Formel (VI) 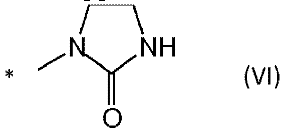 entspricht, wobei * für eine direkte oder indirekte Verknüpfung mit der Polymerkette steht.

10. Polymer nach einem der Ansprüche 1 bis 9, bei dem es sich um ein Elastomer handelt.

11. Verfahren zur Herstellung eines durch Pfropfen modifizierten Polymers, umfassend die Umsetzung eines als Ausgangsstoff dienenden Dienpolymers mit einem Modifizierungsmittel wobei das als Ausgangsstoff dienende Dienpolymer die folgenden Einheiten UA, UB, UC und UD umfasst, wobei das Modifizierungsmittel einerseits eine assoziative Gruppe mit mindestens einem Stickstoffatom und andererseits eine Untereinheit G mit einer Gruppe, die gegenüber der Kette des als Ausgangsstoff dienenden Dienpolymers reaktiv ist, umfasst, wobei die Einheiten UA, UB, UC und UD in dem als Ausgangsstoff dienenden Dienpolymer gemäß den Molprozentanteilen m', n', o' bzw. p' vorliegen und in dem als Ausgangsstoff dienenden Dienpolymer statistisch verteilt sind,
| | |
|---|---|
| UA) | -CH₂-CH₂- |
| UB) | -CH₂-R₁C=CR₂-CH₂- |
| UC) | 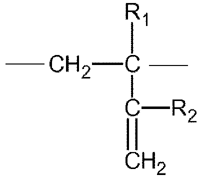 |
| UD) | 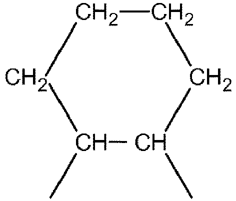 |
▪ wobei R₁ und R₂ gleich oder verschieden sind und für ein Wasserstoffatom, einen Methylrest oder einen Phenylrest, der gegebenenfalls in ortho-, meta- oder para-Position durch einen Methylrest substituiert ist, stehen,
▪ m' ≥ 50,
▪ 0 < o' + p' ≤ 25,
▪ n' + o' > 0,
▪ wobei m', n', o' und p' Zahlen im Bereich von 0 bis 100 sind,
▪ wobei die jeweiligen Molprozentanteile von m', n', o' und p' auf der Basis der Summe von m' + n' + o' + p', die gleich 100 ist, berechnet werden,
wobei die assoziative Gruppe mindestens ein Stickstoffatom umfasst und einer der Formeln (IX) bis (XIII) entspricht: 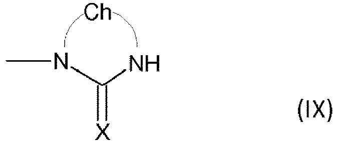 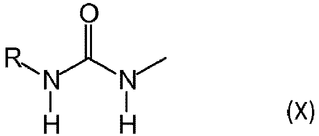 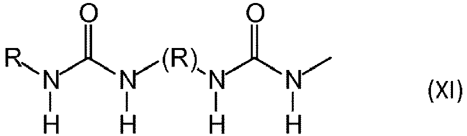 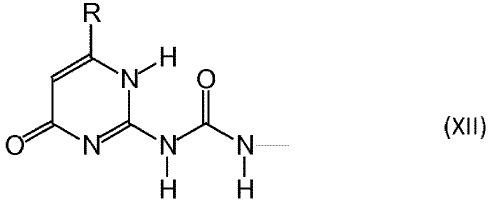 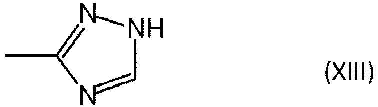 wobei:
▪ X für ein Sauerstoff- oder Schwefelatom oder eine NH-Gruppe, vorzugsweise ein Sauerstoffatom, steht,
▪ R für eine Kohlenwasserstoffgruppe, die gegebenenfalls Heteroatome enthalten kann, steht.

12. Verfahren nach Anspruch 11, bei dem G für eine Untereinheit mit einer Gruppe, die gegenüber mindestens einer Dien-Einheit des als Ausgangsstoff dienenden Dienpolymers reaktiv ist.

13. Verfahren nach Anspruch 11, bei dem die in G enthaltene reaktive Gruppe aus der Gruppe bestehend aus der SH-Funktion, der Azodicarbonylgruppe und einem Dipol, der mindestens und vorzugsweise ein Stickstoffatom enthält, ausgewählt ist.

14. Verfahren nach einem der Ansprüche 11 bis 13, bei dem es sich bei dem Modifizierungsmittel vorzugsweise um ein Nitriloxid, ein Nitron oder ein Nitrilimin handelt.

15. Verfahren nach Anspruch 14, bei dem es sich bei dem Modifizierungsmittel um eine der 1,3-dipolaren Verbindungen der Formel (XXIX) bis (XXXIV) handelt:

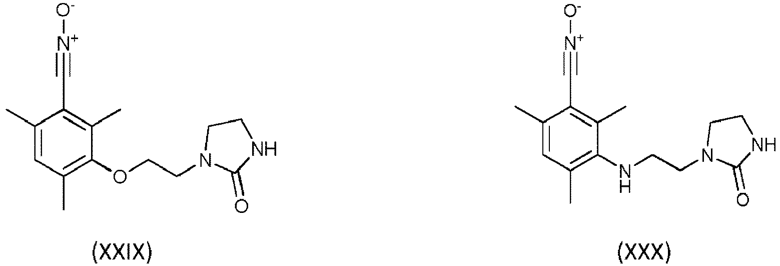

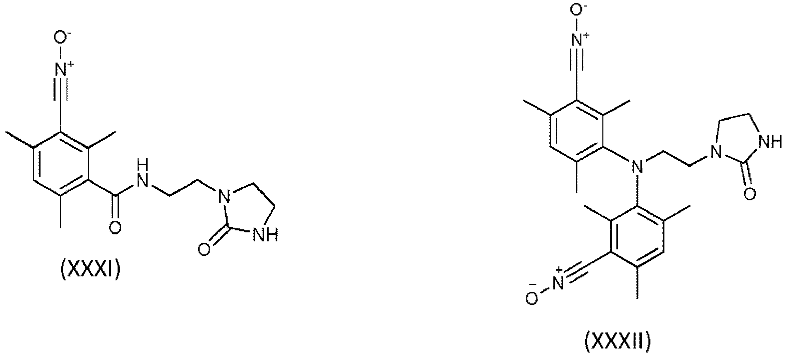

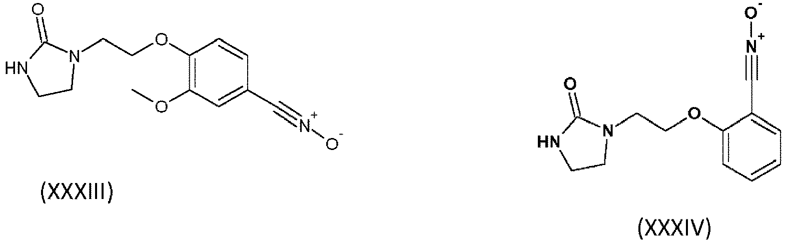

16. Verfahren nach Anspruch 14, bei dem es sich bei dem Modifizierungsmittel um eine der 1,3-dipolaren Verbindungen der Formel (XXXVII) bis (XLI) handelt: 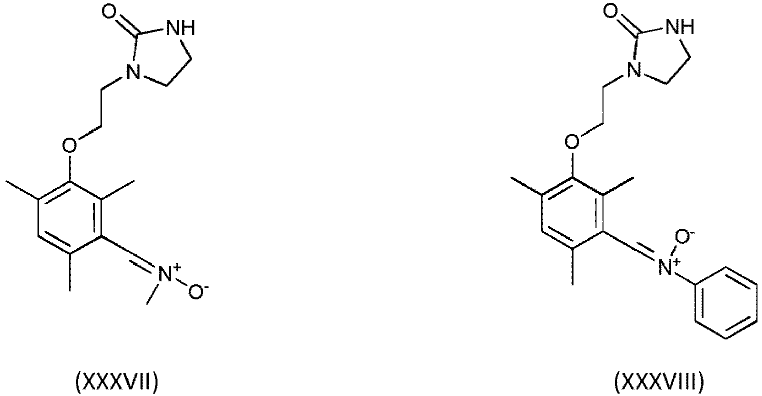 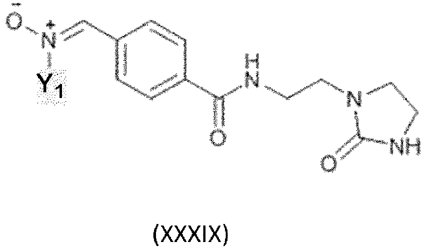 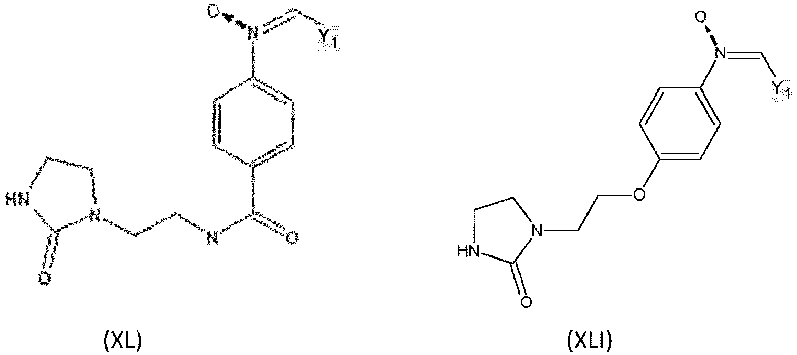 wobei Y₁ für eine aliphatische Gruppe, vorzugsweise eine Alkylgruppe, oder eine Gruppe mit 6 bis 20 Kohlenstoffatomen und einer aromatischen Untereinheit steht.

17. Kautschukzusammensetzung, die einen verstärkenden Füllstoff und ein Elastomer gemäß Anspruch 10 umfasst.

18. Reifen, der eine Kautschukzusammensetzung nach Anspruch 17 umfasst.

## Claims

1. Polymer which comprises the following units UA, UB, UC and UD and at least one unit bearing a subunit F,
| | | |
|---|---|---|
| UA) | -CH₂-CH₂- | according to a molar percentage of m% |
| UB) | -CH₂-R₁C=CR₂-CH₂- | according to a molar percentage of n% |
| UC) | 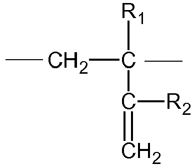 | according to a molar percentage of o% |
| UD) | 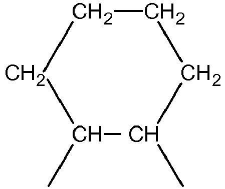 | according to a molar percentage of p% |
| | | |
▪ which units UA, UB, UC and UD are distributed randomly within the polymer
▪ the subunit F being pendant along the chain of the polymer and bearing an associative group comprising at least one nitrogen atom,
▪ the unit bearing the subunit F being present in the polymer chain according to a molar percentage of f%,
▪ R₁ and R₂, which are identical or different, denoting a hydrogen atom, a methyl radical or a phenyl radical which is unsubstituted or substituted in the ortho, meta or para position by a methyl radical,
▪ m ≥ 50
▪ n ≥ 0
▪ o ≥ 0
▪ f > 0
▪ 0 < o + p ≤ 25
▪ m, n, o, p and f being numbers ranging from 0 to 100
▪ the respective molar percentages of m, n, o, p and f being calculated on the basis of the sum of m + n + o + p + f, which is equal to 100
the associative group corresponding to one of the following formulae (I) to (V) 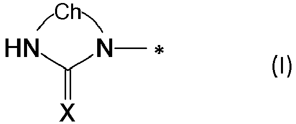 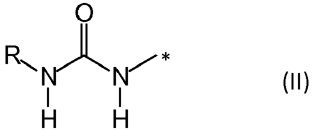 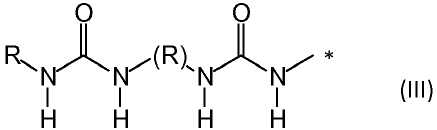 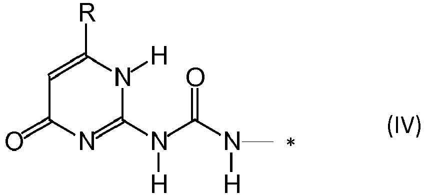 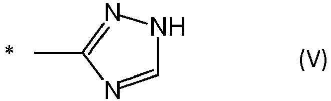 where:
- Ch denotes a carbon chain which can optionally contain heteroatoms,
- * represents a direct or indirect connection to the chain of the polymer,
- R denotes a hydrocarbon group which can optionally contain heteroatoms,
- X denotes an oxygen or sulphur atom or an NH group, preferably an oxygen atom.

2. Polymer according to Claim 1, which contains the following units UE distributed randomly within the polymer,
| | | |
|---|---|---|
| UE) | 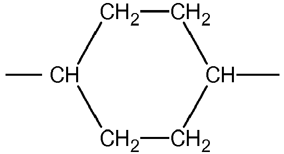 | according to a molar percentage of q% |
▪ o + p + q ≥ 10
▪ q ≥ 0
▪ the respective molar percentages of m, n, o, p, q and f being calculated on the basis of the sum of m + n + o + p + q + f, which is equal to 100.

3. Polymer according to Claim 2, which contains the following units UF distributed randomly within the polymer,
| | | |
|---|---|---|
| UF) | 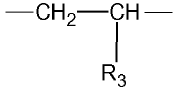 | according to a molar percentage of r% |
▪ R₃ denoting an alkyl radical having from 1 to 4 carbon atoms or an aryl radical,
▪ 0≤ r ≤25.
▪ the respective molar percentages of m, n, o, p, q, r and f being calculated on the basis of the sum of m + n + o + p + q + r + f, which is equal to 100.

4. Polymer according to any one of Claims 1 to 3, in which at least one of the two percentages n and o is different from 0.

5. Polymer according to any one of Claims 1 to 4, in which n and o are different from 0.

6. Polymer according to any one of Claims 1 to 5, in which at least one of the two molar percentages p and q is not equal to 0.

7. Polymer according to any one of Claims 1 to 6, in which R₁ and R₂ are identical and denote a hydrogen atom.

8. Polymer according to any one of Claims 1 to 7, in which f varies from 0.01 to 50%, preferably from 0.01 to 10%, more preferably from 0.03 to 5% and more preferably still from 0.03 to 3%.

9. Polymer according to any one of Claims 1 to 8, in which the associative group corresponds to the formula (VI): 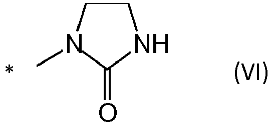 where * represents a direct or indirect connection to the chain of the polymer.

10. Polymer according to any one of Claims 1 to 9, which is an elastomer.

11. Process for preparing a polymer modified by grafting, which process comprises the reaction of a starting diene polymer with a modifying agent, which starting diene polymer comprises the following units UA, UB, UC and UD, which modifying agent comprises, on the one hand, an associative group comprising at least one nitrogen atom and, on the other hand, a subunit G containing a group which is reactive with regard to the chain of the starting diene polymer, the units UA, UB, UC and UD being present in the starting diene polymer according to the respective molar percentages m', n', o' and p' and being distributed randomly within the starting diene polymer,
| | |
|---|---|
| UA) | -CH₂-CH₂- |
| UB) | -CH₂-R₁C-CR₂-CH₂- |
| UC) | 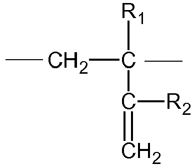 |
| UD) | 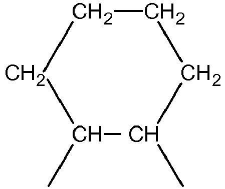 |
▪ R₁ and R₂, which are identical or different, denoting a hydrogen atom, a methyl radical or a phenyl radical which is unsubstituted or substituted in the ortho, meta or para position by a methyl radical,
▪ m' ≥ 50
▪ 0 < o' + p' ≤ 25
▪ n' + o' >0
▪ m', n', o' and p' being numbers ranging from 0 to 100
▪ the respective molar percentages of m', n', o' and p' being calculated on the basis of the sum of m' + n' + o' + p', which is equal to 100
the associative group comprising at least one nitrogen atom corresponds to one of the formulae (IX) to (XIII): 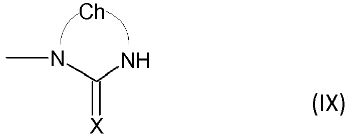 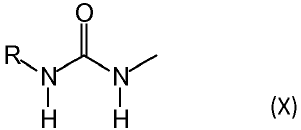 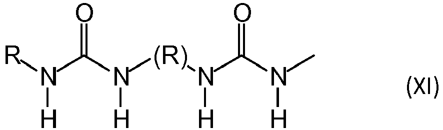 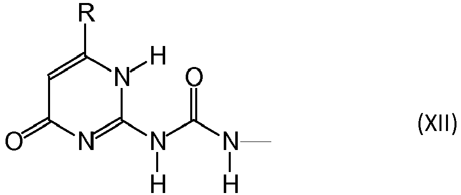 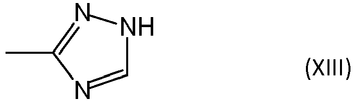 where:
▪ X denotes an oxygen or sulphur atom or an -NH group, preferably an oxygen atom,
▪ R denotes a hydrocarbon group which can optionally contain heteroatoms.

12. Process according to Claim 11, in which G denotes a subunit containing a group which is reactive with regard to at least one diene unit of the starting diene polymer.

13. Process according to Claim 11, in which the reactive group present in G is selected from the group consisting of the SH functional group, the azodicarbonyl group and a dipole containing at least and preferably one nitrogen atom.

14. Process according to any one of Claims 11 to 13, in which the modifying agent is preferably a nitrile oxide, a nitrone or a nitrilimine.

15. Process according to Claim 14, in which the modifying agent is one of the 1,3-dipolar compounds of formula (XXIX) to (XXXIV):

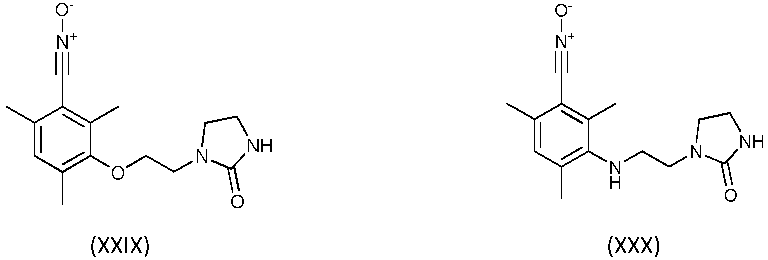

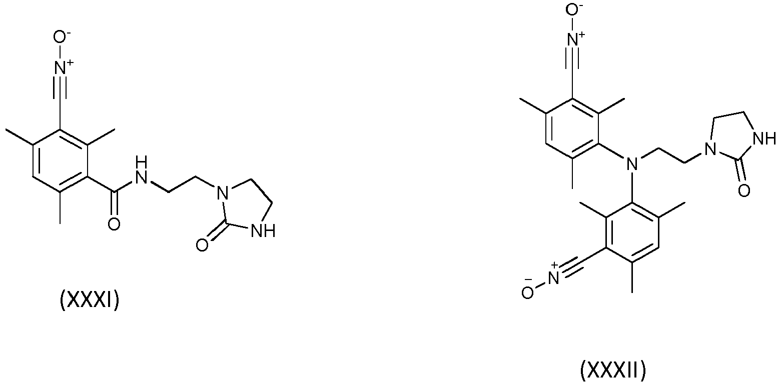

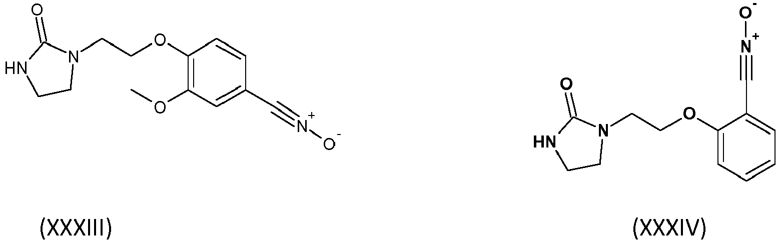

16. Process according to Claim 14, in which the modifying agent is one of the 1,3-dipolar compounds of formula (XXXVII) to (XLI): 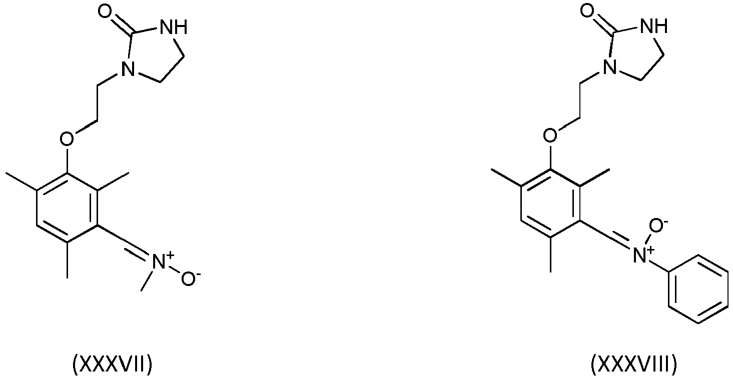 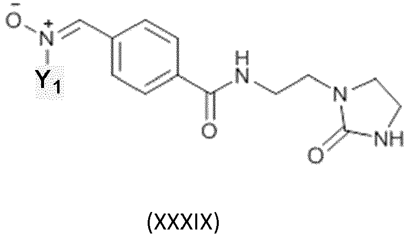 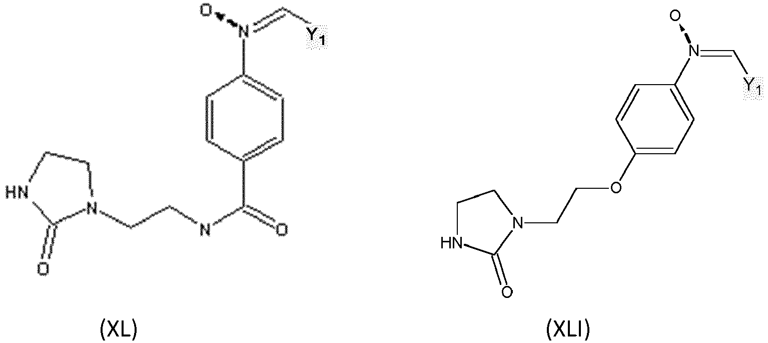 Y₁ being an aliphatic group, preferably an alkyl group or a group containing from 6 to 20 carbon atoms and comprising an aromatic subunit.

17. Rubber composition which comprises a reinforcing filler and an elastomer defined according to Claim 10.

18. Tyre which comprises a rubber composition according to Claim 17.
